# EUROPÄISCHE PATENTSCHRIFT

(11) **EP 0 471 102 B1**
(45) Veröffentlichungstag und Bekanntmachung des Hinweises auf die Patenterteilung: **05.01.1994**
(21) Anmeldenummer: 90115594.5
(22) Anmeldetag: 14.08.1990
(51) Int. Cl.: B60K 41/06, F16H 59/14

(54) **Getriebesteuerung für ein Kraftfahrzeug**
Gear box control method for a motor vehicle
Commande de boîte de vitesses pour véhicule à moteur

(43) Veröffentlichungstag der Anmeldung: 19.02.1992
(73) Patentinhaber: SIEMENS AKTIENGESELLSCHAFT, 80333 München (DE)
(72) Erfinder: Graf, Friedrich, Dipl.-Ing. (FH), D-8400 Regensburg (DE); Kammerl, August, Dipl.-Ing. (FH), D-8411 Brunn (DE)

(56) Entgegenhaltungen:
- EP-A- 0 120 191
- EP-A- 0 142 633
- WO-A-86/05449
- DE-A- 3 018 032
- DE-A- 3 539 682
- DE-A- 3 621 674
- GB-A- 2 047 362

## Beschreibung

Die Erfindung betrifft eine Getriebesteuerung für ein Kraftfahrzeug, durch die bei der Schaltpunktermittlung die auf das Kraftfahrzeug einwirkende Last berücksichtigt wird. Bei gleichmäßiger, d. h. nicht beschleunigter oder verzögerter Fahrt enthält diese Last einen von dem Fahrwiderstand (Luftwiderstand und Rollreibung) herrührenden konstanten Anteil und einen von der Fahrbahnsteigung abhängigen veränderlichen Anteil.

Bei einer aus der EP-B-0142633 bekannten Einrichtung zur Ermittlung der Fahrbahnsteigung nach dem Oberbegriff des Anspruchs 1 werden die von Sensoren für Motordrehzahl, Raddrehzahl, Gaspedalstellung usw. gelieferten Meßwerte ausgewertet und daraus die zum überwinden der genannten Lastanteile erforderlichen Antriebsdrehmoment- oder Motordrehmomentanteile rechnerisch ermittelt. Andere bekannte Steuervorrichtungen für automatische Getriebe verstellen ebenfalls die Schaltpunkte des Getriebes in Abhängigkeit von Fahrparametern, insbesondere von der Straßenneigung, und zwar nach unterschiedlichen Rechenvorschriften (DE-C-2852195, DE-C-3018033)

Eine Einrichtung zur Steuerung einer Kupplungs-Getriebe-Einheit paßt sich an das Fahrverhalten des Fahrers und an die jeweilige Fahr- oder Verkehrssituation an (DE-C-33 41 652). Dazu empfängt sie eine Vielzahl von unterschiedlichen Meßsignalen und wertet sie in aufwendiger Weise zum Betrieb einer Ablaufsteuerung aus.

Der Erfindung liegt die Aufgabe zugrunde, die Schaltpunkte des Getriebes mit geringem Aufwand sowohl an das Fahrverhalten des Fahrers als auch an die Last, insbesondere an die Fahrbahnsteigungen, anzupassen.

Diese Aufgabe wird erfindungsgemäß durch die Getriebesteuerung nach Anspruch 1 gelöst.

Vorteilhafte Weiterbildungen der Erfindung sind durch die Unteransprüche gekennzeichnet.

Ausführungsbeispiele der Erfindung werden im folgenden anhand der Zeichnung erläutert. Es zeigen:
- Figur 1: die wichtigsten Bestandteile des Antriebs eines Kraftfahrzeugs, das mit einer erfindungsgemäßen Getriebesteuerung versehen ist, als Blockdiagramm dargestellt;
- Figur 2: eine erfindungsgemäße Getriebesteuerung, in schematischer Darstellung;
- Figur 3: ein Diagramm mit Schaltkennlinien der Getriebesteuerung nach Figur 2;
- Figuren 4 bis 8: verschiedene Diagramme, die der Erläuterung der Funktion der erfindungsgemäßen Getriebesteuerung, bei ebenem Fahrbahnverlauf dienen und
- Figuren 9 bis 12: verschiedene Diagramme zur Erläuterung der Funktion der erfindunggemäßen Getriebesteuerung, bei Fahrt auf einer Steigung.

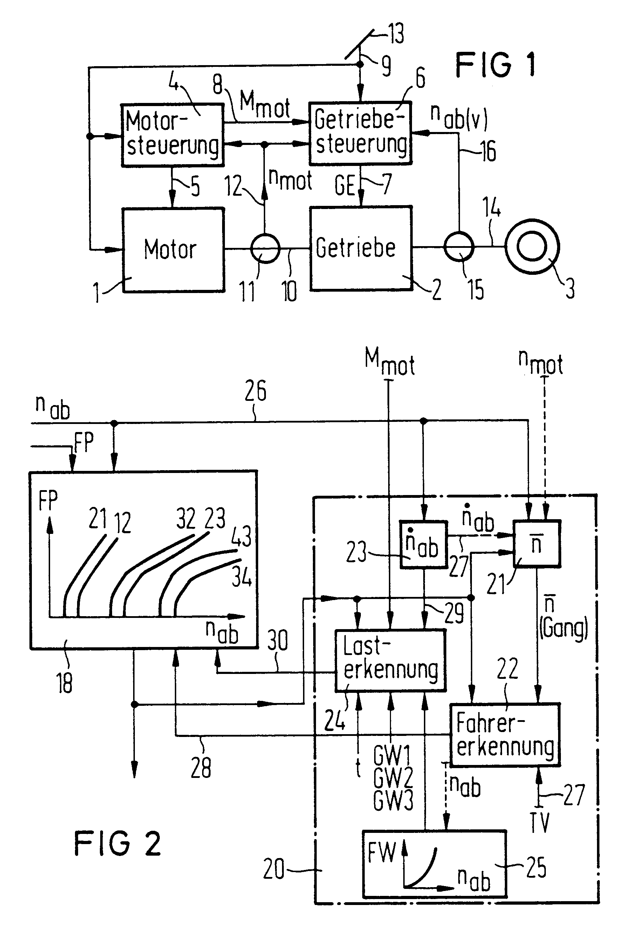

Das von einem Motor 1 gelieferte Antriebsdrehmoment wird über ein automatisches Getriebe 2 auf die angetriebenen Räder, von denen in der Zeichnung nur ein Rad 3 dargestellt ist, des Kraftfahrzeugs übertragen (Figur 1). Eine elektronische Motorsteuerung 4 steuert den Motor 1 über eine Signalleitung 5. Eine elektronische Getriebesteuerung 6 steuert das automatische Getriebe 2 über eine Signalleitung 7, wobei sie insbesondere den jeweils einzulegenden Gang GE festlegt.

Über eine Datenleitung 8 erhält die Getriebesteuerung 6 von der Motorsteuerung 4 eine Information über das jeweils abgegegebene Motordrehmoment Mₘₒₜ. Ein die Motorausgangswelle 10 abtastender Drehzahlsensor 11 liefert über eine Signalleitung 12 die Motordrehzahl nₘₒₜ an die Motorsteuerung 4 und die Getriebesteuerung 6. Mit einem Fahrpedal 13 steuert der Fahrer das Getriebe 2 über die Getriebesteuerung 6 und den Motor 1. Die Steuersignale werden dabei über eine Signalleitung 9 übertragen. Ein die Getriebe-Abtriebswelle 14 abtastender weiterer Drehzahlsensor 15 liefert über eine Signalleitung 16 die Getriebeabtriebsdrehzahl n_{ab} an die Getriebesteuerung 6. Die Getriebeabtriebsdrehzahl n_{ab} ist auch ein Maß für die Fahrzeuggeschwindigkeit v.

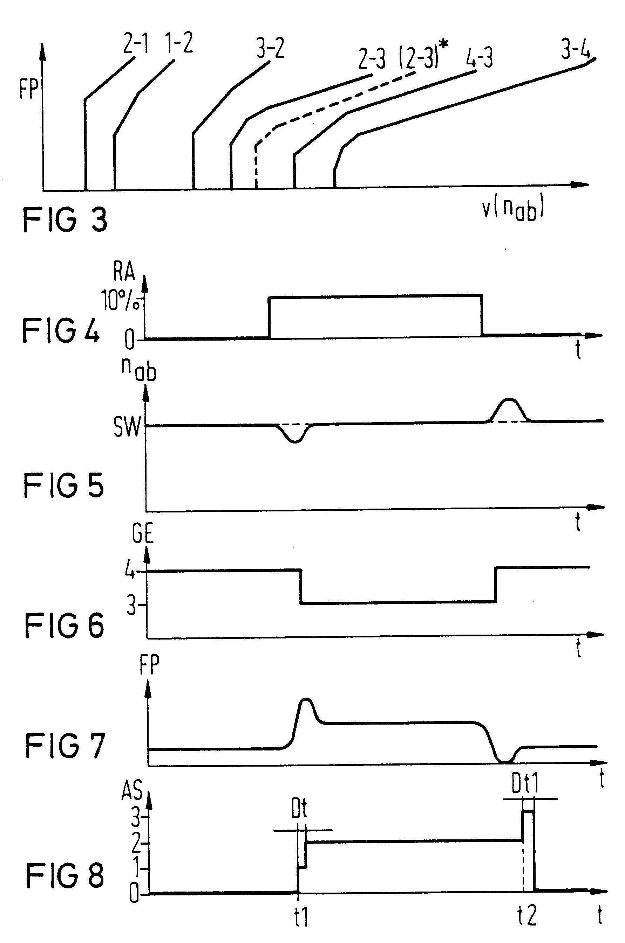

Die Getriebesteuerung 6 erzeugt die Schaltbefehle für das Getriebe 2 mit Hilfe von abgespeicherten Schaltkennlinien, wie sie in dem Diagramm von Figur 3 dargestellt sind. Auf der Abzisse dieses Diagramms ist die Fahrzeuggeschwindigkeit v oder die Getriebeabtriebsdrehzahl n_{ab}, auf der Ordinate die Motorlast oder die mit dieser korrespondierende Fahrpedalstellung FP aufgetragen. Die Linie mit dem Parameter "3-2" beispielsweise legt fest, in welcher Fahrpedalstellung FP bei einer gegebenen Fahrzeuggeschwindigkeit oder bei welcher Fahrzeuggeschwindigkeit bei einer gegebenen Fahrpedalstellung das Getriebe von dem zweiten in den dritten Gang hochschaltet. Ohne weiteres ist zu erkennen, daß bei stärker niedergetretenem Fahrpedal FP, d. h. bei sogenannter sportlicher Fahrweise, das Hochschalten und das Zurückschalten bei höheren Geschwindigkeiten oder Abtriebsdrehzahlen erfolgen.

Durch Umschalten auf ein Kennlinienfeld mit nach rechts verschobenen Schaltkennlinien ist es möglich, in einem gegebenen Gang höhere Drehzahlen und damit ein höheres Drehmoment an der Getriebeabtriebswelle zu erreichen als im nächsthöheren Gang. Dies ist zum einen für die sportliche Fahrweise nützlich, zum anderen aber auch, wenn beim Befahren einer Steigung mehr Drehmoment benötigt wird, um eine bestimmte Geschwindigkeit zu halten. In Figur 3 ist als Beispiel eine nach rechts - d. h. in Richtung höherer Leistung - verschobene Kennlinie (2-3)* gestrichelt eingezeichnet. Entsprechend sind natürlich alle anderen Kennlinien nach rechts verschoben.

Das Verschieben der Kennlinien kann manuell geschehen. Die hier beschriebene Getriebesteuerung erkennt dagegen das Fahrverhalten des jeweiligen Fahrers und den jeweiligen Lastzustand und paßt die Schaltpunkte des Getriebes selbsttätig einerseits an den jeweiligen Fahrer und andererseits an den jeweiligen Lastzustand - abhängig von der Fahrbahnsteigung oder von der Fahrzeugbeladung - an. Darüber hinaus ermöglicht sie es auch, einzelne Schaltkennlinienpaare selektiv zu verschieben oder umzuschalten. Die von der Getriebesteuerung benötigten Eingangsgrößen sind (vergleiche auch Figur 1) die Fahrzeuggeschwindigkeit v oder die Abtriebsdrehzahl n_{ab} des Getriebes, der eingelegte Gang GE, und das von dem Motor augenblicklich abgegebene Drehmoment Mₘₒₜ. Wie bereits erwähnt, wird sich das Getriebe bei einem sportlichen Fahrer immer in Bereichen mit hohen Abtriebsdrehzahlen in dem jeweiligen Gang befinden, da diese einem stärker niedergetretenem Fahrpedal (größeres Fahrpedal-Stellungssignal) entsprechen. Dies gilt insbesondere beim Beschleunigen. Berücksichtigt wird dies durch die hier beschriebene Getriebesteuerung, indem sie die zeitlich gemittelte Abtriebsdrehzahl n̅ benutzt, um den Fahrstil zu bewerten.

Ein Kennfeldspeicher 18 (Figur 2) entspricht in etwa einer herkömmlichen Getriebesteuerung, die die Gänge über die gespeicherten Schaltkennlinien auswählt, indem sie feststellt, ob z. B. bei einer Beschleunigung Kennlinien überschritten werden. Der Kennfeldspeicher 18 ist hier mit einer Erkennungs- und Steuerschaltung 20 versehen. Diese enthält einen Mittelwertbildner 21, eine Vergleichsschaltung 22, einen Differenzierer 23, eine Last-Erkennungsschaltung 24 und einen Fahrwiderstand-Kennlinienspeicher 25.

Über eine Leitung 26 gelangen die laufenden Werte der Abtriebsdrehzahl n_{ab} zu dem Kennfeldspeicher 18, dem Mittelwertbildner 21 und dem Differenzierer 23. In dem Mittelwertbildner 21 wird die Antriebsdrehzahl gangabhängig aufbereitet, d. h. es wird über ein Zeitintervall Dt der Mittelwert n̅ (Gang) von n_{ab} gebildet, jeweils für einen Gang. Es kann aber auch der Mittelwert n̅ gangunabhängig aus der Motordrehzahl nₘₒₜ gemittelt werden. Tastet man die Abtriebsdrehzahl n_{ab} in dem Mittelwertbildner 21 bei Beschleunigungsvorgängen und/oder bei Schaltvorgängen häufiger ab und bewertet sie damit zur Berechnung des Mittelwerts n̅ stärker als außerhalb dieser Vorgänge, so wird damit das Verhalten des Fahrers noch genauer erfaßt. Dies ist in der Zeichnung durch eine gestrichtelte Leitung 27 angedeutet, über die der in dem Differenzierer 23 gebildete Beschleunigungswert n_{ab} als Steuerinformation zu dem Mittelwertbildner 21 gelangt.

In der Vergleichsschaltung 22 wird der gangabhängige Drehzahl-Mittelwert n̅(Gang) oder der gangunabhängige Mittelwert n̅ mit einem Schwellwert TV verglichen, der über eine Leitung 27 angelegt wird. Dieser Schwellwert TV wird entsprechend dem zu bildenden Mittelwert entweder gangabhängig oder gangunabhängig vorgegeben. Überschreiten die Mittelwerte n̅(Gang) oder n̅ den vorgegebenen Schwellwert, so wird ein Steuersignal erzeugt und über eine Leitung 28 an den Kennfeldspeicher 18 übermittelt. Mit diesem Signal werden einzelne oder alle Kennlinien verschoben oder umgeschaltet und damit wird dem Fahrer ein seiner Fahrweise angepaßtes Schaltverhalten bereitgestellt. Die Vergleichsschaltung 22 erfüllt damit die Funktion einer Fahrererkennung.

Sinken die Mittelwerte n̅(Gang) oder n̅ unter entsprechend vorgegebene weitere Schwellwerte, so wird das vorstehend beschriebene Verschieben oder Umschalten wieder rückgängig gemacht, d. h. es wird auf Kennlinien umgeschaltet, die ein verbrauchoptimiertes Schaltverhalten des Getriebes bewirken.

Das in dem Differenzierer erzeugte, der Beschleunigung des Fahrzeuges proportionale Signal ṅ_{ab} gelangt über eine Leitung 29 zu der Erkennungsschaltung 24 und wird dort daraufhin überprüft, ob, nachdem eine konstante Geschwindigkeit erreicht worden ist, das tatsächliche Motordrehmoment Mₘₒₜ dem Fahrwiderstand FW in der Ebene entspricht. Es wird dazu eine Fahrwiderstands-Kennlinie verwendet, die als Funktion der Abtriebsdrehzahl n_{ab} in dem Kennlinienspeicher 25 abgelegt ist.

Sind kumulativ folgende drei Bedingungen erfüllt:
a) Mₘₒₜ > Grenzwert GW1 und
b) |ṅ_{ab}| < Grenzwert GW2 für Zeitspanne Dt = 1 und
c) Mₘₒₜ > (eta/ü) x FW (n_{ab}) + Grenzwert GW3 für Dt = 1

worin eta der Getriebewirkungsgrad und
ü die Übersetzung ist,
so stellt die Erkennungsschaltung 24 fest, daß ein von der Ebene abweichender Fahrwiderstand vorliegt, z. B. in Form einer Steigung. Die Erkennungsschaltung 24 erzeugt ein Signal, das über eine Leitung 30 auf den Kennfeldspeicher 18 übermittelt wird und dort ein Verschieben oder Umschalten der Schaltkennlinien auf Schaltpunkte bewirkt, an denen nach dem Schaltvorgang ein höheres Motordrehmoment zur Verfügung steht als bei verbrauchsoptimierten Kennlinien.

Ein Zurückschalten auf verbrauchsoptimierte Kennlinien erfolgt, wenn nach Eintreten der Bedingungen a) und b) die Bedingung c) nicht erfüllt ist. Hierbei wird allerdings - wie allgemein hier bei den Schaltvorgängen - ein anderer Grenzwert GW3 und eine andere Zeitspanne Dt1 vorgegeben, um eine Schalthysterese zu erhalten. Diese verhindert ein laufendes Herauf- und Herunterschalten des Getriebes bei geringfügigen Laständerungen.

Die Diagramme der Figuren 4 bis 8 zeigen den Zusammenhang zwischen der Fahrbahnsteigung RA, der Abtriebsdrehzahl n_{ab}, dem eingelegten Gang GE, der Stellung des Fahrpedals FP und dem Status AS der Adaption, die mit der Getriebesteuerung durchgeführt wird. Alle Größen sind über der Zeit t aufgetragen. Der Fahrer versucht, mit dem Fahrpedal den Sollwert FW der Abtriebsdrehzahl n_{ab} einzustellen. Der Fahrer gibt einen Sollwert SW für die Geschwindigkeit oder Abtriebsdrehzahl vor (Figur 5). Der Istwert (durchgezogene Linie) erfährt dabei nur beim Anfahren oder Verlassen der Steigung (Figur 4) eine Abweichung vom Sollwert SW. Beim Befahren der Steigung ermöglicht es die Getriebesteuerung, Sollwert und Istwert in Übereinstimmung zu bringen. Das ist darauf zurückzuführen, daß über eine Adaption die Schaltkennlinien rechtzeitig umgeschaltet und somit ein angepaßter Gang eingelegt wird.

Vor dem Zeitpunkt t₁ (Figur 8) besteht Adaptionsstatus AS = 0, d.h. es sind die verbrauchsoptimierten Schaltkennlinien aktiv. Ab dem Zeitpunkt t₁ werden im Zeitraum Dt die Bedingungen b) und c) geprüft; die Bedingung a) muß dabei ebenfalls erfüllt sein (AS = 1). Da alle Bedingungen erfüllt sind, erreicht die Adaption den Zustand AS = 2 (Schaltkennlinienumschaltung). Zum Zeitpunkt t₂, wenn das Fahrzeug gerade die Steigung verlassen hat, werden im Zustand AS = 3 die Bedingungen für die Rücknahme der Adaption für die Zeit Dt1 geprüft. Nach Erfüllen der entsprechenden Bedingungen erreicht die Adaption wieder den Zustand AS = 0.

Es ist erkennbar, daß der Fahrer nach der Schaltkennlinienumschaltung (AS = 2) mit dem Fahrpedal (Figur 7) eine konstante Stellung findet, um die geschwünschte Geschwindigkeit zu halten. Es tritt kein "Schaltpendeln" bei Befahren der Steigung auf.

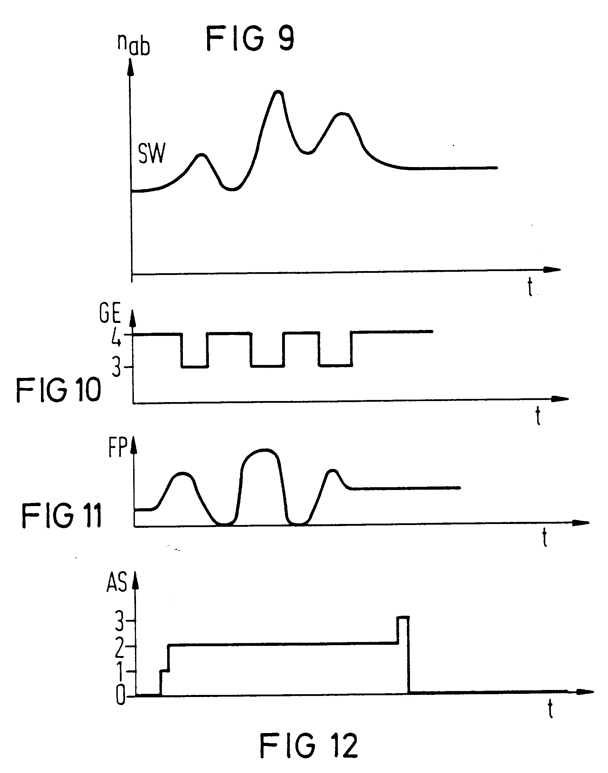

Die Diagramme der Figuren 9 bis 12 zeigen die vorstehend genannten Größen für ein Fahrzeug, das eine ebene Strecke durchfährt, das aber eine erhöhte Beladung aufweist. Der Verlauf der Sollgeschwindigkeit SW könnte dem Verlauf der Geschwindigkeit bei einer kurvenreichen Strecke entsprechen. Tritt der Fahrer das Fahrpedal nieder, um einen gewünschten Sollwert der Geschwindigkeit oder Abtriebsdrehzahl n_{ab} einzustellen, so erfolgt eine geringere Beschleunigung des Fahrzeugs als mit normaler Beladung. In einem Zeitpunkt bereits erhöhten Motordrehmoments liegt nahezu die Beschleunigung null vor. Damit sind die Bedingungen a), b) und c) erfüllt. Das hat zur Folge, daß bei starker Beschleunigung die drehmomentoptimierten Schaltkennlinien auch dann das Schaltverhalten festlegen, wenn eine erhöhte Fahrzeugbeladung vorliegt.

In einem Ausführungsbeispiel der Getriebesteuerung haben sich folgende Werte für die eingegebenen Parameter als zweckmäßig erwiesen:
- Grenzwert GW1 =: 60 Nm
- Grenzwert GW2 =: 30 U/min/s
- Grenzwert GW3 =: 45 Nm für die Aktivierung
= - 10 Nm für die Desaktivierung
- Zeitspanne Dt1 =: 250 ms für die Aktivierung
500 ms für die Desaktivierung

## Patentansprüche

1. Getriebesteuerung (1,18, 20) für ein Kraftfahrzeug, durch die bei der Schaltpunktermittlung die auf das Kraftfahrzeug einwirkende Last, die Motordrehzahl (nₘₒₜ)und das Motordrehmoment (Mₘₒₜ) berücksichtigt werden,
**dadurch gekennzeichnet,**
daß sie eine Schaltungsanordnung (24) aufweist, durch die ermittelt wird:
- ob das Motordrehmoment (Mₘₒₜ) über einem den Zugbetrieb des Kraftfahrzeugs charakterisierenden ersten Grenzwert liegt,
- ob der Betrag der Beschleunigung (n_{ab}) unter einem eine unbeschleunigte Fahrt charakterisierendem zweiten Grenzwert liegt, und
- ob das Motordrehmoment (Mmot) über einem den Fahrwiderstand in der Ebene charakterisierenden Drehmoment zuzüglich eines dritten Grenzwerts liegt,
und durch die beim Erfülltsein der drei vorstehenden Bedingungen ein Signal (27) erzeugt wird, durch das die von dem eingelegten Gang abhängigen Schaltpunkte in Richtung höhere Abtriebsdrehzahl verschoben werden.

2. Getriebesteuerung nach Anspruch 1,
**dadurch gekennzeichnet,**
daß sie einen Mittelwertbildner (21) enthält, mit dem die Motor- oder Abtriebsdrehzahlen (nₘₒₜ, n_{ab}) in den einzelnen Gängen (GE) gemittelt werden.

3. Getriebesteuerung nach Anspruch 2,
**dadurch gekennzeichnet,**
daß mit dem Mittelwerbildner (21) die Motor- oder Abtriebsdrehzahlen über alle Gänge gemittelt werden.

4. Getriebesteuerung nach Anspruch 2 oder 3,
**dadurch gekennzeichnet,**
daß sie eine Vergleichsschaltung (22) enthält, in der die gemittelten Motor- oder Abtriebsdrehzahlen (nₘₒₜ, n_{ab}) mit einem oberen Schwellwert verglichen werden und in der bei Überschreiten dieses Schwellwerts ein Signal erzeugt wird, durch das die Schaltpunkte in Richtung höherer Antriebsdrehzahl verschoben werden.

5. Getriebesteuerung nach Anspruch 2 oder 3,
**dadurch gekennzeichnet,**
daß in der Vergleichsschaltung (22) die gemittelten Motor- oder Abtriebsdrehzahlen (nₘₒₜ, n_{ab}) mit einem unteren Schwellwert verglichen werden und in der bei Unterschreiten dieses Schwellwerts die Schaltpunkte in Richtung geringerer Antriebsdrehzahl verschoben werden.

## Claims

1. Gearbox control (1, 18, 20) for a motor vehicle, by means of which the load acting on the motor vehicle, the engine speed (nₘₒₜ) and the engine torque (Mₘₒₜ) are taken into account during the determination of the shift point, characterized in that the said control has a circuit arrangement (24) by means of which it is determined:
- whether the engine torque (Mₘₒₜ) lies above a first limit value which characterises the traction mode of the motor vehicle,
- whether the acceleration value (n_{ab}) lies below a second limit value which characterises non-accelerated travel, and
- whether the engine torque (Mₘₒₜ) lies above a torque, plus a third limit value, which characterises the travel resistance in the plane,
and by means of which a signal (27) is produced when the three conditions above are fulfilled, by means of which signal the shift points, dependent on the selected gear, are displaced in the direction of higher power output speed.

2. Gearbox control according to Claim 1, characterized in that it contains an average value former (21) with which the engine speeds and power output speeds (nₘₒₜ, n_{ab}) in the individual gears (GE) are averaged.

3. Gearbox control according to Claim 2, characterized in that, with the average value former (21), the engine speeds or power output speeds are averaged over all the gears.

4. Gearbox control according to Claim 2 or 3, characterized in that it contains a comparison circuit (22) in which the averaged engine speeds or power output speeds (nₘₒₜ, n_{ab}) are compared with an upper threshold value and in which a signal is produced when this threshold value is exceeded, by means of which signal the shift points are displaced in the direction of higher drive speed.

5. Gearbox control according to Claim 2 or 3, characterized in that, in the comparison circuit (22), the averaged engine speeds or power output speeds (nₘₒₜ, n_{ab}) are compared with a lower threshold value and in which the shift points are displaced in the direction of lower drive speed when this threshold value is undershot.

## Revendications

1. Système de commande de la boîte de vitesses (1,18,20) pour un véhicule automobile, à l'aide de laquelle, lors de la détermination du point de changement de vitesse, on tient compte de la charge agissant sur le véhicule automobile, de la vitesse de rotation (nₘₒₜ) du moteur et du couple (Mₘₒₜ) du moteur, caractérisé par le fait qu'il comporte un montage (24) permettant de déterminer :
- si le couple (Mₘₒₜ) du moteur dépasse une première valeur limite caractérisant le fonctionnement en traction du véhicule automobile,
- si la valeur de l'accélération (n_{ab}) est inférieure à une seconde valeur limite caractérisant un déplacement non accéléré, et
- si le couple (Mₘₒₜ) du moteur est supérieur à une troisième valeur limite du couple caractérisant la résistance de déplacement dans le plan,
et qui produit, lorsque les trois conditions précédentes sont satisfaites, un signal (27) au moyen duquel les points de changement de vitesse, qui dépendent du rapport engagé, sont déplacés en direction de vitesses de rotation accrues sur le côté mené.

2. Système de commande de la boîte de vitesses selon la revendication 1, caractérisé par le fait qu'il comporte un dispositif (21) de formation de la valeur moyenne, qui forme, pour les différents rapports (GE), les moyennes des vitesses de rotation (nₘₒₜ,n_{ab}) du moteur ou du côté mené.

3. Système de commande de la boîte de vitesses suivant la revendication 2, caractérisé par le fait que le dispositif (21) de formation de la valeur moyenne forme la moyenne des vitesses de rotation du moteur ou du côté mené pour tous les rapports.

4. Système de commande de la boîte de vitesses suivant la revendication 2 ou 3, caractérisé par le fait qu'il comporte un circuit comparateur (22), dans lequel les vitesses de rotation moyenne (nₘₒₜ, n_{ab}) du moteur ou du côté mené sont comparées à une valeur de seuil supérieure et, dans le cas du dépassement de cette valeur de seuil, un signal est produit, qui provoque le décalage des points de changement de vitesse vers une vitesse de rotation d'entraînement plus élevée.

5. Système de commande de boîte de vitesses suivant la revendication 2 ou 3, caractérisé par le fait que dans le circuit comparateur (22), les vitesses de rotation moyennes (nₘₒₜ, n_{ab}) du moteur ou du côté mené sont comparées à une valeur de seuil inférieure et, dans le cas du dépassement par valeurs inférieures de cette valeur de seuil, les points de changement de vitesse sont décalés en direction d'une vitesse de rotation d'entraînement plus faible.
